# EUROPEAN PATENT APPLICATION

(11) **EP 2 796 287 A1**
(43) Date of publication of application: **29.10.2014**
(21) Application number: 13002209.8
(22) Date of filing: 26.04.2013
(51) Int. Cl.: B32B 7/04, B32B 7/06, B32B 11/04, E04D 1/26

(54) **Bituminous shingle panel and a method of preparation thereof**

(71) Applicant: Werner Janikowo Sp. z o.o., 66-400 Gorz w Wielkopolski (PL)
(72) Inventor: Wisniewski, Tomasz Adam, PL 95-054 Ksawerów (PL)
(74) Representative: Klassek, Maciej Adam

(57) **Abstract**

The invention refers to a bituminous shingle panel and a method of preparing thereof. A shingle panel has a carrying insert layer (2), coated on both sides with bituminous layers (3,4), having on one side a coat in the form of granular grit (5) applied to a top layer and coated with a protective foil on the bottom, which protective foil (6) has at least one regular external fold (7) on the surface of a shingle panel (1), favorably going lengthwise or crosswise to a shingle panel (1). A method comprises an impregnation of a carrying insert strip with a saturant, coating both sides of a carrying insert with bituminous masses, application of granular grit to one side of a resultant multilayer bituminous strip, application of a protective foil layer to another side of a resultant multilayer bituminous strip and cutting bituminous shingle panels out of a resultant multilayer bituminous material, where a protective foil strip (6) is of a width greater than a width of a multilayer bituminous strip, prior to being applied to a bottom surface of a multilayer bituminous strip undergoes lengthwise fold formation by letting a foil (6) through a gap between two adjustable and separated profiled jaws (9, 10) of a sheet die (11), active surfaces of which are provided with interlocking protrusions (12, 13).

## Description

The present invention refers to a bituminous single panel and a method of preparation thereof.

There are known bituminous multilayer shingles containing a carrying insert, favorably in the form of glass or polyester fiber, which can be impregnated with a bituminous saturant, bituminous layers made of a bituminous mixture applied to both faces of a carrying insert from the top and from the bottom, wherein bituminous mixture usually contains bitumen, a filler and a modifier. Top surface of known shingles is coated with a protective layer of removable foil.

Bituminous shingles are usually prepared in the form of panels, that is a set of interconnected shingles made of a single piece of material and forming a single assembly element, which in the process of installation can be freely adjusted and trimmed.

A known method of preparing known bituminous shingles consists in preparation of a strip of bituminous tar paper, and then cutting shingle panels out of this strip.

A method of preparation of a tar paper strip consists in applying a layer of a bituminous mixture to a carrying insert, favorably impregnated with a bituminous saturant, wherein a bituminous mixture contains bitumen, a filler, and, favorably, a modifier and a top layer of bituminous mixture is finished with mineral grit in different colors, and a bottom layer of bituminous mixture is coated with plastic foil.

This foil serves as a protection against adhesion of two neighboring layers, and against any potential damage, and is removed in the process of roofing installation. In the process of applying foil, plastic foil is applied to a moving strip of tar paper, with adhesion achieved thanks to adhesive properties of a bottom tar paper layer by unreeling a strip and pressing it in a controllable way against a bottom surface of tar paper, and then performing an operation of cutting a shingle out of a strip.

In a known method plastic foil is applied to the bottom surface of the bottom layer of a bituminous mixture in such a way that a foil layer has a flat surface without any deliberate folds, and adheres tightly to the surface of the bituminous layer over the entire width of a tar paper strip. Next operation of a known method consists in cutting bituminous shingle panels out of a tar paper strip obtained this way, said panels having different shapes, and it is possible for cutting to be performed over the length of a tar paper strip so that several bituminous shingle panels are obtained from a tar paper width, or over the width of a tar paper strip, so that one bituminous shingle panel is obtained from a tar paper width.

A method of installing bituminous shingle panels on a roof, when their bottom layer is coated with plastic foil, consists in placing shingle panels next to one another in such a way that side edges of single neighboring panels in one row are in contact with each other, and parts of shingle panels in a higher row overlap parts of shingle panels in a lower row.

Foil removal is usually very difficult and labor consuming due to tight adhesion between a foil and a bituminous mixture applied to a carrying element on the bottom, and it involves laborious prying off a foil layer along its side edges in order to remove it from the bottom of a bituminous layer. Removal of foil is the most time consuming and most difficult activity during installation of shingles on a roof surface.

A basic drawback of known bituminous shingle panels with a flat bottom surface covered regularly with plastic foil is that they are not provided with any explicit foil gripping spot where foil could be gripped for removal or where its adhesion to the surface layer could be weakened. Plastic foil adheres tightly to the entire surface of bituminous grit on a bottom surface of a carrying insert and it does not extend anywhere over the entire length of an external edge of a shingle or a bituminous shingle panel.

Known bituminous shingle panels are not provided with any deliberate folds on the foil surface or with any deliberate foil excess extending beyond a shingle edge that would make it possible to grip the foil and tear it off.

After removal of plastic foil, an adhesive bottom layer of a bituminous surface is exposed, which adheres to a top surface of a grit-coated neighboring shingle panel in a lower row.

Connection of bituminous shingle panels happens as a result of gluing due to higher ambient temperature when shingle panels are heated up by sunbeams or by an external artificial heat source, e.g. am adjustable gas torch flame.

It is often the case that while removing foil from the shingle bottom surface, it cracks in such a way that part of it is removed and part of it still sticks to the bituminous mixture surface, which makes foil removal even harder and longer, thus extending the entire process of shingle installation.

The present invention refers to a design of a bituminous shingle panel coated with plastic foil on the bottom, which makes it possible to remove plastic foil in an easy and fast way in the process of roofing installation.

A bituminous shingle panel according to the invention comprises a layer of a carrying insert, favorably made of polyester or glass fiber, favorably impregnated with an organic saturant, coated with bituminous layers on both sides, and having on one side, that is on the top, a coating in the form of grit applied to its surface, and coated with a protective foil on the bottom, wherein this protective foil on the shingle surface has at least one regular external fold, favorably lengthwise or crosswise to the shingle.

Folds on the bottom surface of a shingle do not adhere to a bituminous mass surface of a bottom bituminous layer covering a carrying layer, and after shingle panels stacking they can freely bend or flatten.

Installation of bituminous shingle panels according to the invention is performed in a known way. This known way consists in placing shingle panels next to one another in such a way that side edges of single neighboring panels in one row are in contact with each other, and parts of shingle panels in a higher row overlap parts of shingle panels in a lower row.

Before installation of every single shingle panel, plastic foil is removed. Removal of foils from shingle panels according to the invention is very easy and fast as foil folds on the bottom surface make it possible to grip the foil in a convenient and firm way, and once a fold is pulled, foil is easily and quickly removed from the surface. To enable foil removal in a number of directions, a fold can be cut lengthwise, for example with a knife, and then each foil part can be gripped separately and removed towards the edge.

After removal of plastic foil a bottom surface of a bituminous mixture is exposed and can adhere to a top surface of another panel in a lower row.

The present invention refers also to a method of preparation of bituminous shingle panels.

A method of preparation of bituminous shingle panels according to the invention comprises impregnation of a carrying insert, favorably made of polyester or glass fiber with an organic saturant, coating both sides of a carrying insert with bituminous layers containing bitumen, at least one filler and, possibly, at least one modifier, applying granular grit to one side of a resultant multilayer bituminous strip, said grit favorably colored, applying a strip of a protective foil to another side of a resultant multilayer foil, and cutting bituminous shingle panels out of a resultant multilayer bituminous strip, wherein a strip of protective foil, having a width greater than a width of a multilayer bituminous strip is folded lengthwise by letting it through a gap between two adjustable and non-contacting profiled jaws of a sheet die having interlocking protrusions on the active jaw surfaces.

Favorably, foil width is greater than a width of a multilayer bituminous strip at least by a sum of a double height of all folds over the width of a multilayer bituminous strip.

The object of the invention is shown in the attached drawing where:

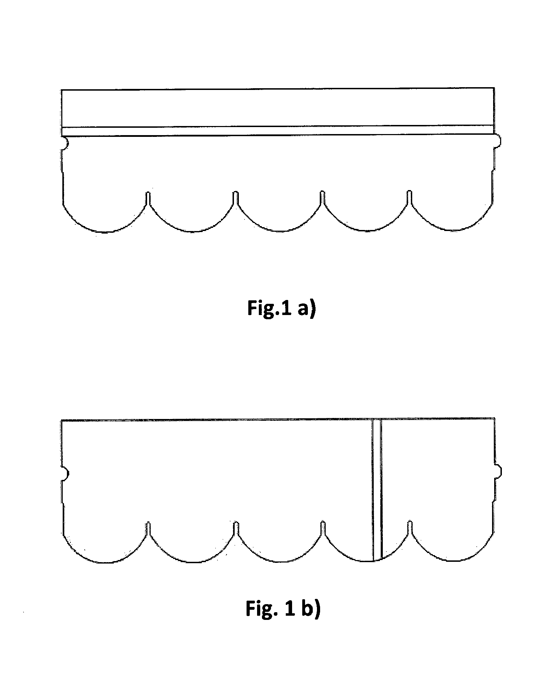

Fig. 1 shows a view of a bituminous shingle panel having: a) one lengthwise foil fold and b) one crosswise foil fold,

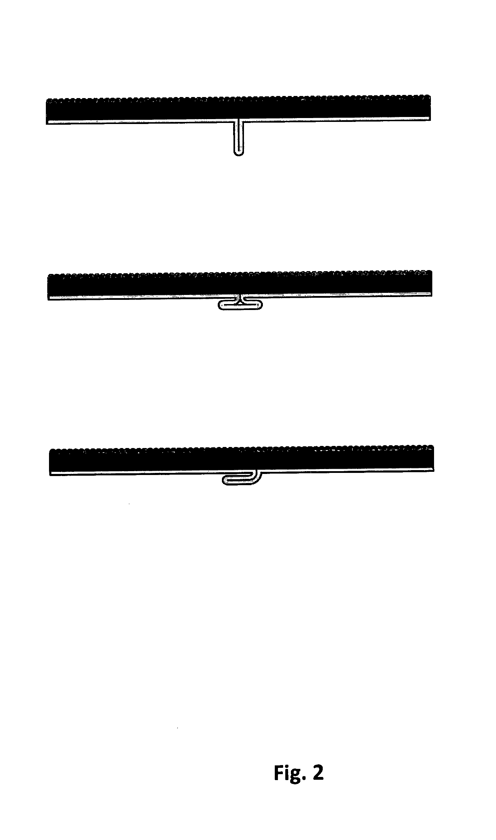

Fig. 2 shows a part of a cross section in a number of foil fold configurations,

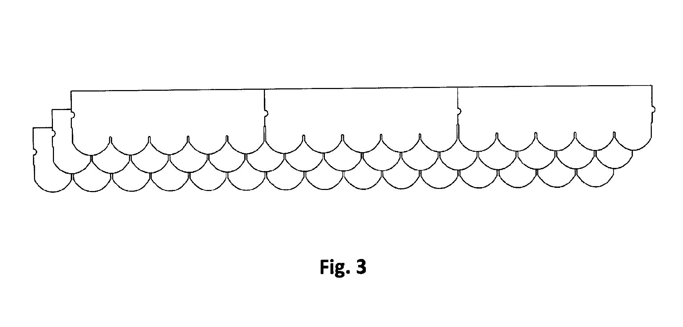

Fig. 3 shows a top view of a part of a roofing obtained as a result of laying bituminous shingle panels according to the invention;

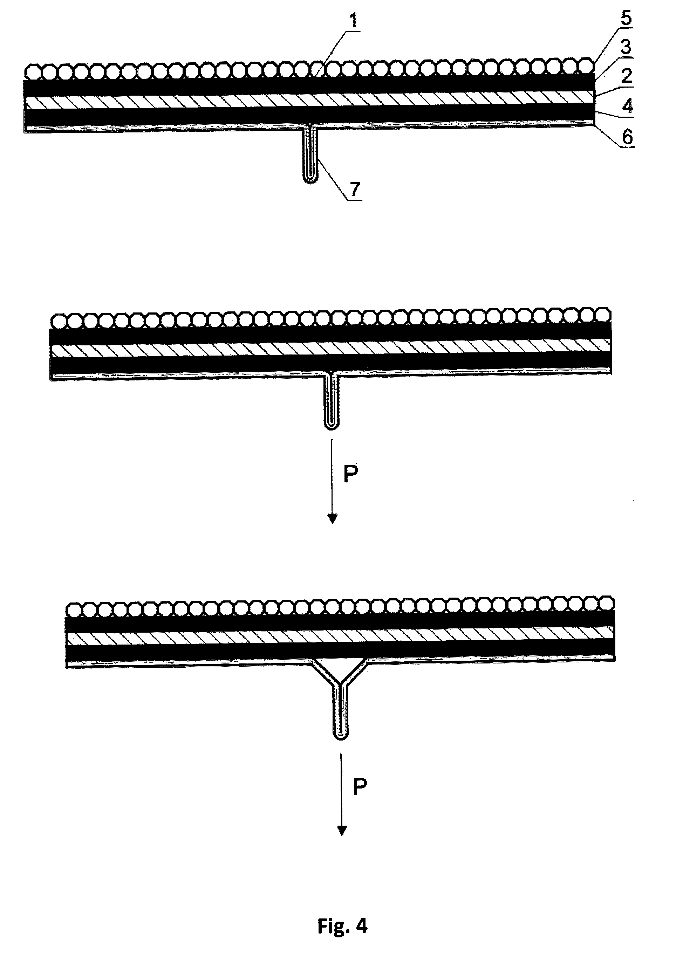

Fig. 4 shows a part of a cross-section of a shingle at the moment of foil removal after application of force P,

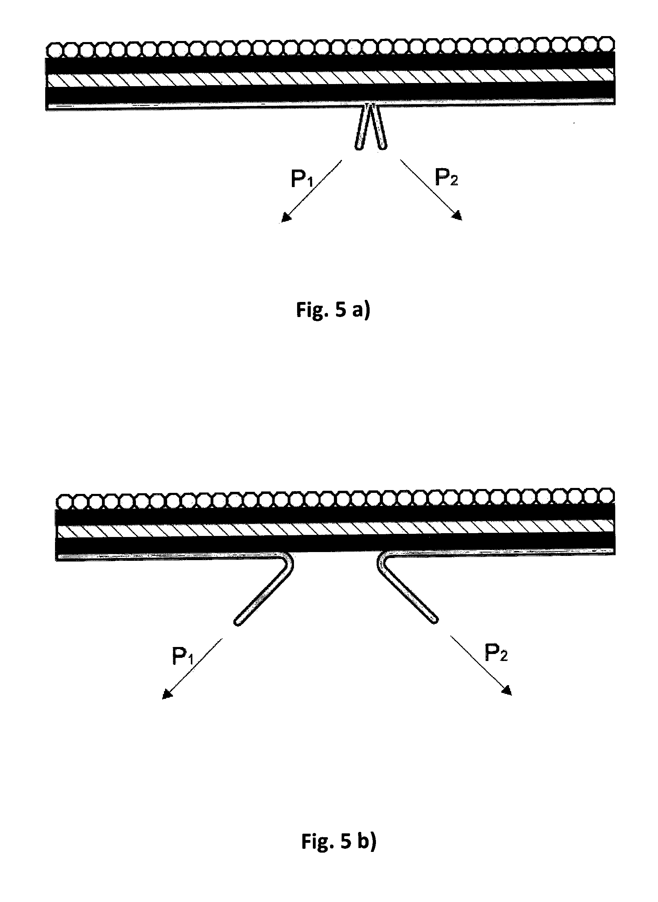

Fig. 5 shows a part of a cross-section of a shingle panel with a cut-through foil at the moment of: a) applying forces P₁ and P₂ tearing off the foil to both sides and b) foil removal;

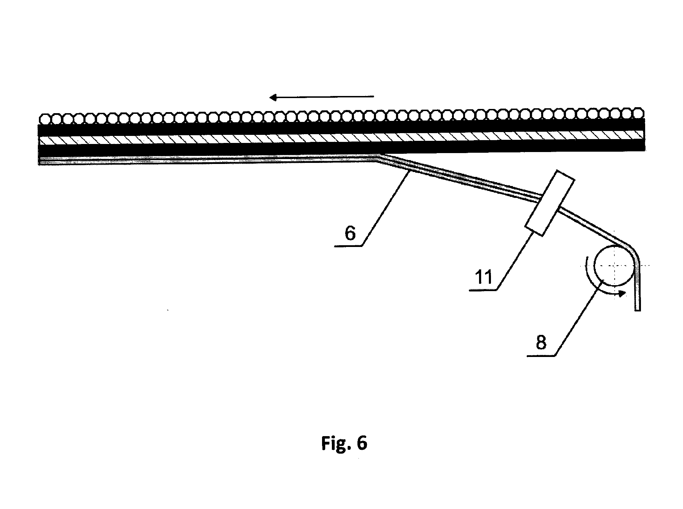

Fig. 6 shows a schematic view of a process line at which foil folds are formed and foil is applied to a bottom surface of a multilayer bituminous strip;

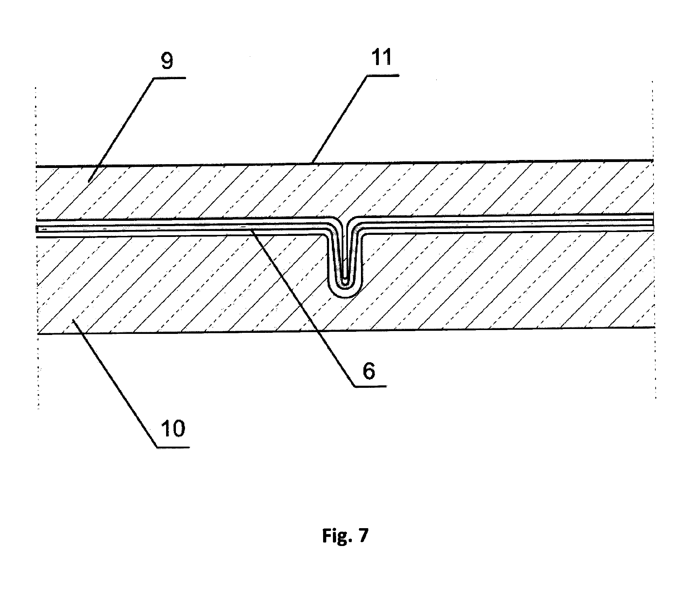

Fig. 7 shows a cross section of a sheet die for foil fold forming with the foil in a gap between the jaws.

Bituminous shingle panel **1** according to the invention comprises a layer of a carrying insert **2** made of glass fiber impregnated with a bituminous organic saturant. Both sides of the insert are coated with bituminous masses containing a bituminous material, fillers and a synthetic modifier forming a top bituminous layer **3** and a bottom bituminous layer **4.** Surface of the top bituminous layer **3** is finished with a layer of fine-grain mineral grit **5** in brick red. Surface of the bottom bituminous layer **4** is coated with a thin polyethylene foil **6** wherein said foil **6** is provided with a regular fold **7** which is 10 mm high, located mid-width in the shingle panel **1**.

In order to produce a bituminous shingle panel **1** using a method according to the invention, an unreeled strip of polyester fiber performing the function of a carrying layer **2** was impregnated with a solution of a bituminous saturant of low viscosity and then coated on both sides with a bituminous mass containing a fine-grain mineral filled in the form of stone dust and a modifier in the form of acrylic dispersion, thus forming a top bituminous layer **3** and a bottom bituminous layer **4**.

Then, a top layer **3** of resultant multilayer bituminous strip was coated with a layer of fine grit **5** in the form of finely crushed brick-red stone. Surface of a bottom bituminous mass layer **4** of a resultant multilayer strip was coated with a strip of a protective polyethylene foil **6**, a strip of which, after unreeling from a reel **8**, was let through a gap of adjustable profiled jaws **9, 10** of a sheet die **11,** having working surfaces provided with interlocking protrusions **12, 13.** After going through a sheet die **11** a foil **6** coated a bottom surface of a bottom bituminous layer **4**, forming regular lengthwise folds **7** along a multilayer bituminous strip, and then, without stopping the movement of the strip, bituminous shingle panels **1** were cut out of the strip.

In another embodiment, in the process of applying foil to a bottom tar paper surface, some folds **7** were cut through along the edge.

## Claims

1. A bituminous shingle panel having a carrying insert layer, favorably made of polyester or glass fiber, favorably impregnated with an organic saturant, coated on both sides with bituminous layers, having on one side a coat in the form of granular grit applied to a top layer and coated with a protective foil on the bottom, **characterized in that** a protective foil (**6**) has at least one regular external fold (**7**) on the surface of a shingle panel (**1**), favorably going lengthwise or crosswise to a shingle panel (**1**).

2. A bituminous shingle panel according to claim 1, **characterized in that** a fold (**7**) of foil (**6**) is cut through along its edge .

3. A method of preparing bituminous shingle panels comprising potential impregnation with a saturant, and particularly a bituminous saturant, of a carrying insert strip, favorably made of polyester or glass fiber, coating both sides of a carrying insert with bituminous masses, application of granular grit to one side of a resultant multilayer bituminous strip, application of a protective foil layer to another side of a resultant multilayer bituminous strip and cutting bituminous shingle panels out of a resultant multilayer bituminous material, **characterized in that** a protective foil strip (**6**) of a width greater than a width of a multilayer bituminous strip, prior to being applied to a bottom surface of a multilayer bituminous strip undergoes lengthwise fold formation by letting a foil (**6**) through a gap between two adjustable and separated profiled jaws (**9, 10**) of a sheet die (**11**), active surfaces of which are provided with interlocking protrusions **(12, 13).**

4. A method according to claim 3, **characterized in that** after application of a foil (**6**) at least one resultant fold (**7**) is cut through along the edge.

5. A method according to claim 3, **characterized in that** a foil width (**6**) is greater than a width of a multilayer bituminous strip at least by a sum of double height (**a**) of all folds (**7**) made over the width of a multilayer bituminous strip.
